# EUROPÄISCHE PATENTANMELDUNG

(11) **EP 1 398 699 A1**
(43) Veröffentlichungstag der Anmeldung: **17.03.2004**
(21) Anmeldenummer: 02020602.5
(22) Anmeldetag: 12.09.2002
(51) Int. Cl.: G06F 11/16

(54) **Verfahren zur Ereignissynchronisation, insbesondere für Prozessoren fehlertoleranter Systeme**

(71) Anmelder: SIEMENS AKTIENGESELLSCHAFT, 80333 München (DE)
(72) Erfinder: Peleska, Pavel, 82166 Gräfelfing (DE); Schnabel, Dirk, 81369 München (DE)

(57) **Zusammenfassung**

Für redundante Systeme werden vielfach identisch aufgebaute Prozessorboards vorgesehen, die im Lockstep-Betrieb arbeiten. Die grundlegende Voraussetzung für die Implementierung eines Lockstep Systems ist das deterministische Verhalten aller im Board enthaltenen Komponenten, also CPUs, Chip Sets, Hauptspeicher etc. Deterministisches Verhalten bedeutet dabei, daß diese Komponenten im fehlerfreien Fall identische Ergebnisse zu identischen Zeitpunkten liefern, wenn die Komponenten identische Stimuli zu identischen Zeitpunkten erhalten. Deterministisches Verhalten setzt ferner die Verwendung taktsynchroner Schnittstellen voraus. Asynchrone Schnittstellen bewirken im System in vielen Fällen eine gewisse zeitliche Unschärfe, wodurch das taktsynchrone Gesamtverhalten des Systems nicht aufrecht erhalten werden kann. Um dennoch einen Lockstep-Betrieb durchführen zu können, sieht die vorliegende Erfindung ein Verfahren zur Synchronisation externer Ereignisse, die einem Baustein (CPU) zugeführt werden und diesen beeinflussen, vor, demgemäss die externen Ereignisse durch Pufferelemente zwischengespeichert werden, wobei die in den Pufferelementen gespeicherten externen Ereignisse in einem gesonderten Betriebsmodus des Bausteins zur Verarbeitung durch eine Ausführungseinheit (EU) des Bausteins abgerufen werden und wobei der Baustein in diesen Betriebsmodus ansprechend auf die Erfüllung einer vorgebbaren bzw. vorgegebenen Bedingung eintritt, welche die Anzahl der ausgeführten Instruktion widerspiegelt.

## Beschreibung

Verfahren zur Ereignissynchronisation, insbesondere für Prozessoren fehlertoleranter Systeme

In Telekommunikationssystemen, in Data-Centern und anderen hochverfügbaren Systemen werden in vielen Fällen bis zu einigen Hundert sogenannter Prozessorboards eingesetzt, um die erforderliche Rechenleistung vorzusehen. Ein solches Prozessorboard besteht typischerweise aus einem Prozessor bzw. einer CPU (Central Processing Unit), einem Chip Set, Hauptspeicher und Peripheriebausteinen.

Die Wahrscheinlichkeit des Auftretens eines Hardware-Defektes eines typischen Prozessorboards pro Jahr liegt im einstelligen Prozentbereich. Aufgrund der großen Anzahl zu einem System zusammengefasster Prozessorboards ergibt sich eine auf den Jahreszeitraum bezogene sehr hohe Wahrscheinlichkeit eines Ausfalls einer beliebigen Hardware-Komponente, wobei ein solcher Einzelausfall, falls geeignete Vorkehrungen nicht getroffen werden, den Ausfall des gesamten Systems hervorrufen kann.

Insbesondere an Telekommunikationssysteme, in zunehmendem Maße auch an Data-Center, wird die Forderung nach einer hohen Systemverfügbarkeit gestellt. Diese wird beispielsweise in Prozent ausgedrückt, oder es wird die maximal zulässige Ausfallzeit pro Jahr angegeben. Typische Anforderungen sind z.B. eine Verfügbarkeit von >99.999% bzw. eine Nichtverfügbarkeit von höchstens einigen Minuten im Jahr. Da üblicherweise der Austausch eines Prozessorboards und die Wiederherstellung des Dienstes im Falle eines Hardwaredefektes eine Zeit beansprucht, die im Bereich einige 10 Minuten bis einige Stunden liegt, müssen für den Fall eines Hardwaredefektes auf Systemebene entsprechende Vorkehrungen getroffen werden, um die Forderung nach der Systemverfügbarkeit erfüllen zu können.

Bekannte Lösungen zur Einhaltung solch hoher Anforderungen an die Systemverfügbarkeit sehen redundante Systemkomponenten vor. Die bekannten Verfahren lassen sich in zwei hauptsächliche Gruppen einteilen: softwarebasierte Verfahren und hardwarebasierte Verfahren.

Bei softwarebasierten Verfahren wird typischerweise eine Middleware eingesetzt. Die softwarebasierte Lösung erweist sich jedoch als wenig flexibel, da lediglich diejenige (Applikations-)Software in einem solchen System eingesetzt werden kann, die für dieses besondere Redundanzschema entwickelt wurde. Dies schränkt das Spektrum einsetzbarer (Applikations-)Software erheblich ein. Darüber hinaus ist die Entwicklung von Applikationssoftware für Softwareredundanzprinzipien in der Praxis äußerst aufwendig, wobei die Entwicklung zusätzlich ein kompliziertes Testverfahren nach sich zieht.

Das Grundprinzip hardwarebasierter Verfahren beruht darauf, die Redundanz auf Hardwareebene zu kapseln, so daß dies für die Software transparent ist. Der wesentliche Vorteil einer von der Hardware selbst verwalteten Redundanz ist der, daß die Applikationssoftware durch das Redundanzprinzip nicht beeinträchtigt wird und somit in den meisten Fällen jede beliebige Software zum Einsatz kommen kann.

Ein in der Praxis häufig anzutreffendes Prinzip für hardwarefehlertolerante Systeme, deren Redundanz für die Software transparent ist, ist das sogenannte Lockstep-Prinzip. Lockstep bedeutet, daß identisch aufgebaute Hardware, z.B. zwei Boards, gleichartig taktsynchron betrieben werden. Durch Hardwaremechanismen wird sichergestellt, daß die redundante Hardware zu einem gegebenen Zeitpunkt identische Eingangsstimuli erfährt und dadurch zu identischen Ergebnissen kommen muß. Die Ergebnisse der redundanten Komponenten werden verglichen, im Fall einer Abweichung wird ein Fehler festgestellt und geeignete Maßnahmen werden eingeleitet (Alarmierung an das Bedienpersonal, partielle oder vollständige Sicherheitsabschaltung, Systemneustart).

Die grundlegende Voraussetzung für die Implementierung eines Lockstep-Systems ist das deterministische Verhalten aller im Board enthaltenen Komponenten, also CPUs, Chip Sets, Hauptspeicher etc. Deterministisches Verhalten bedeutet dabei, daß diese Komponenten im fehlerfreien Fall identische Ergebnisse zu identischen Zeitpunkten liefern, wenn die Komponenten identische Stimuli zu identischen Zeitpunkten erhalten. Deterministisches Verhalten setzt ferner die Verwendung taktsynchroner Schnittstellen voraus. Asynchrone Schnittstellen bewirken im System in vielen Fällen eine gewisse zeitliche Unschärfe, wodurch das taktsynchrone Gesamtverhalten des Systems nicht aufrecht erhalten werden kann.

Gerade für Chip Sets und CPUs bieten asynchrone Schnittstellen jedoch technologische Vorteile bei der Erhöhung der Leistungsfähigkeit, wodurch eine taktsynchrone Betriebsweise nach dem Lockstep-Verfahren unmöglich wird. Zudem verwenden moderne CPUs zunehmend Mechanismen, die eine taktsynchrone Betriebsweise unmöglich machen. Dies sind beispielsweise interne, nach außen nicht sichtbare Korrekturmaßnahmen, z.B. Korrektur eines internen, korrigierbaren Fehlers beim Zugriff auf den Cache-Speicher, die zu einer geringfügigen Verzögerung der Befehlsabarbeitung führen können, oder die spekulative Ausführung von Befehlen. Ein weiteres Beispiel ist die zukünftig zunehmende Implementierung von CPU-internen taktfreien Ausführungseinheiten, die erhebliche Vorteile hinsichtlich Geschwindigkeit und Verlustleistung ermöglichen, jedoch ein taktsynchrones bzw. deterministisches Arbeiten der CPU verhindern.

Es ist daher eine Aufgabe der vorliegenden Erfindung, ein Verfahren anzugeben, durch welches die Vorteile des Lockstep-Verfahrens zu gewahrt bleiben und welches der technologischen Entwicklung Rechnung trägt.

Diese Aufgabe wird durch ein Verfahren zur Synchronisation externer Ereignisse gemäß der Merkmale des Patentanspruchs 1, einen Prozessorbaustein gemäß der Merkmale des Patentanspruchs 5 und ein System gemäß der Merkmale des Patentanspruchs 6 gelöst.

Bevorzugte Ausführungsformen sind Gegenstand der abhängigen Ansprüche.

Erfindungsgemäß wird ein Verfahren zur Synchronisation externer Ereignisse, die einem Baustein CPU zugeführt werden und diesen beeinflussen, vorgesehen, demgemäss die externen Ereignisse zwischengespeichert werden, wobei die gespeicherten externen Ereignisse in einem gesonderten Betriebsmodus des Bausteins zur Verarbeitung durch eine Ausführungseinheit EU des Bausteins abgerufen werden und wobei der Baustein in diesen Betriebsmodus ansprechend auf die Erfüllung einer durch Befehle vorgebbaren oder fest vorgegebenen Bedingung eintritt.

Gemäß einer vorteilhaften Weiterbildung wird die vorgebbare Bedingung realisiert, indem der Wechsel in den gesonderten Betriebsmodus ausgeführt wird, falls durch ein Komparatorelement K des Bausteins die Übereinstimmung eines Zählelementes CIC mit einem Registerelement MIR ermittelt wird, wobei der Inhalt des Registerelementes MIR durch Befehle vorgebbar ist und das Zählelement CIC die Anzahl der durch die Ausführungseinheit ausgeführten Instruktionen seit dem letzten Wechsel in den gesonderten Betriebsmodus enthält.

Das Verfahren ist besonders vorteilhaft im Zusammenhang mit redundanten Systemen anwendbar, die zumindest zwei Bausteine CPU aufweisen und in denen eine identische Folge von Instruktionen für die Bausteine CPU vorgesehen ist und durch die Bausteine im gesonderten Betriebsmodus identische externe Ereignisse abgerufen werden.

Gemäß einer Ausprägung der Erfindung wird in redundanten Systemen ein schnellerer Baustein CPU durch eine Steuerung im gesonderten Betriebsmodus belassen, bis ein langsamerer Baustein das Ende des gesonderten Betriebsmodus erreicht hat.

Die Erfindung sieht ferner einen Prozessorbaustein CPU vor, der zumindest folgendes aufweist:
- mindestens eine Ausführungseinheit EU,
- mindestens ein Zählerelement CIC zum Zählen der durch die Ausführungseinheit ausgeführten Instruktionen seit dem letzten Wechsel in den gesonderten Betriebsmodus,
- mindestens ein Registerelement MIR, dessen Inhalt durch Befehle vorgebbar oder fest vorgegeben ist,
- mindestens ein Komparatorelement K zum Umschalten der Ausführungseinheit EU in einen gesonderten Betriebsmodus ansprechend auf die Übereinstimmung des Zählelementes CIC mit dem Registerelement MIR, wobei in dem gesonderten Betriebsmodus zwischengespeicherte, dem Prozessorbaustein zuzuführende externe Ereignisse, die den Prozessorbaustein (CPU) beeinflussen, durch den Prozessorbaustein CPU abgerufen werden.

Der Abruf der zwischengespeicherten externen Ereignisse kann dabei vorteilhaft mittels Software, Firmware, Microcode oder Hardware erfolgen.

Erfindungsgemäß wird außerdem ein System bestehend aus mindestens zwei Prozessorbausteinen CPU vorgesehen, wobei die Prozessorbausteine CPU jeweils zumindest folgendes aufweisen:
- mindestens eine Ausführungseinheit EU,
- mindestens ein Zählerelement CIC zum Zählen der durch die Ausführungseinheit ausgeführten Instruktionen seit dem letzten Wechsel in den gesonderten Betriebsmodus,
- mindestens ein Registerelement MIR, dessen Inhalt durch Befehle vorgebbar oder fest vorgegeben ist,
- mindestens ein Komparatorelement K zum Umschalten der Ausführungseinheit EU in einen gesonderten Betriebsmodus ansprechend auf die Übereinstimmung des Zählelementes CIC mit dem Registerelement MIR, wobei in dem gesonderten Betriebsmodus zwischengespeicherte, den Prozessorbausteinen zuzuführende externe Ereignisse, welche die Prozessorbausteine beeinflussen, durch die Prozessorbausteine abgerufen werden.

Der Abruf der zwischengespeicherten externen Ereignisse kann dabei vorteilhaft mittels Software, Firmware, Microcode oder Hardware erfolgen.

Vorteilhaft weist dieses System zusätzlich eine Verbindung zwischen zumindest zwei der Prozessorbausteine CPU, die eine identische Instruktionsfolge ausführen, auf, wobei die Verbindung zum Übertragen von Synchronisationsinformationen der gesonderten Betriebsmodi vorgesehen ist.

Ein wesentlicher Vorteil der Erfindung ist darin zu sehen, daß die Verwendung beliebiger neuer oder bestehender Software auf einer hardwarefehlertoleranten Plattform ermöglicht wird, wobei in dieser Plattform eine die Erfindung unterstützende CPU zum Einsatz kommen kann, ohne daß die Forderung nach taktsynchroner, deterministischer Arbeitsweise der CPU besteht und wobei die Verwendung asynchroner Hochgeschwindigkeitsschnittstellen bzw. Links möglich ist.

Weitere Vorteile sind:
- Die zueinander redundanten Boards und CPUs müssen nicht phasenstarr gekoppelt betrieben werden.
- Die CPUs müssen nicht identisch sein, sie müssen lediglich nach der gleichen Anzahl abgearbeiteter Maschineninstruktionen anhalten und den Betriebsmodus wechseln.
- Die CPUs können mit unterschiedlichen Taktfrequenzen betrieben werden.
- Die CPUs können sich unterschiedlich in Bezug auf die spekulative Ausführung von Instruktionen verhalten, da nur die komplettierten Instruktionen bewertet werden.
- Unterschiedliche CPU-interne Ausführungszeiten identischer CPUs, z.B. aufgrund von Korrekturen nach dem datenverfälschendem Auftreten von Alpha-Teilchen, führen lediglich dazu, daß der Synchronisationsmodus zu geringfügig unterschiedlichen Zeitpunkten erreicht wird.

Die beschriebenen Probleme bei der Sicherstellung der taktsynchron deterministischen Arbeitsweise führen aufgrund der zeitlichen Unschärfe zukünftiger CPUs zu zeitlich nicht exakt korrelierbarer Befehlsausführung. Da die CPU bei einer typischen Applikation auf externe Ereignisse reagieren muß, z.B. auf einen von einem Peripheriegerät generierten Interrupt oder auf Daten, die von einem Gerät in den Hauptspeicher geschrieben wurden, muß sichergestellt werden, daß die CPU von diesen Ereignissen an identischen Stellen in der Befehlsausführung in Kenntnis gesetzt wird, da sonst die Bewertung dieser Ereignisse zu unterschiedlichen Programmabläufen redundanter CPUs führen könnte.

Die vorliegende Erfindung sorgt dafür, daß externe, für den Programmablauf relevante Ereignisse, wie z.B. Interrupts oder von externen Geräten erzeugte Daten, redundanten CPUs an identischen Stellen der Befehlsausführung präsentiert werden und dadurch die Lockstep-Betriebsweise emuliert werden kann.

Im folgenden wird ein Ausführungsbeispiel der Erfindung im Zusammenhang mit einer Figur näher erläutert.

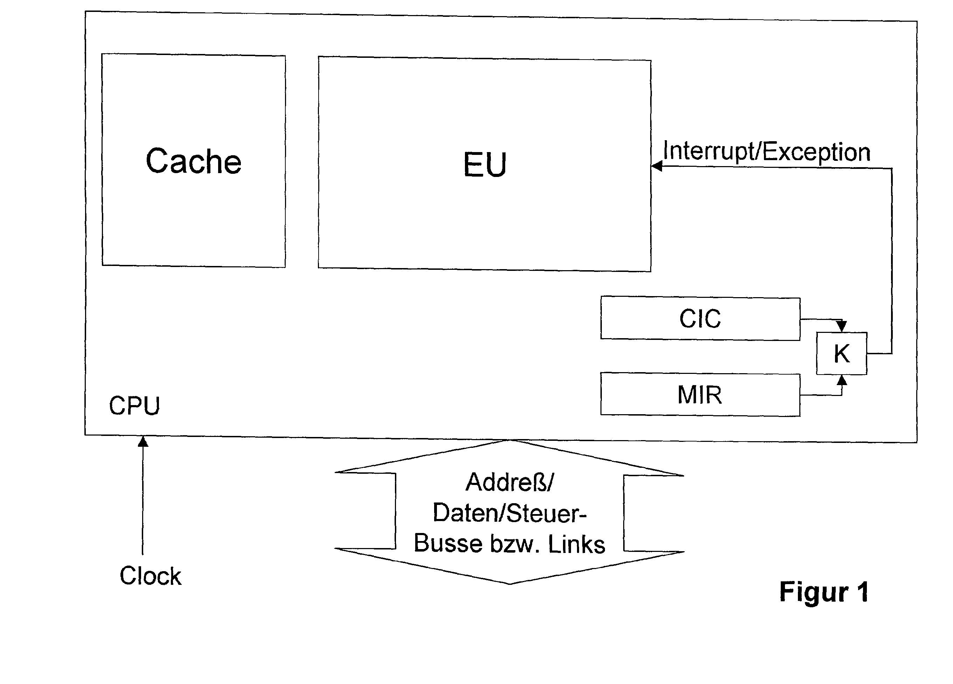

In Figur 1 wird ein erfindungsgemäßer Prozessorbaustein CPU schematisch dargestellt. Dabei sind nur die für diese Erfindung relevanten Bestandteile dargestellt. Die CPU umfaßt einen Cache-Speicher C, eine oder mehrere Ausführungseinheiten EU, mindestens einen Komparator K, mindestens einen Zähler CIC zum Zählen der durch die Ausführungseinheit ausgeführten Instruktionen und mindestens ein Registerelement MIR, dessen Inhalt durch Befehle vorgebbar oder fest vorgegeben sein kann. Ferner sind schematisch dargestellt: Adressbus, Datenbus, Steuerbus, Verbindungen bzw. Links und ein Systemtakt Clock.

Die den Programmablauf beeinflussenden externen Ereignisse werden der CPU nicht direkt zugeführt, sondern von einer geeignet gestalteten Hardware zunächst gepuffert. Diese Hardware kann dabei Bestandteil eines Bausteins außerhalb der CPU oder Bestandteil der CPU selbst sein. Die CPU enthält erfindungsgemäß den Zähler CIC (Completed Instruction Counter), der Instruktionen oder Maschinenbefehle zählt, welche die CPU komplett ausgeführt hat. Die CPU enthält ferner ein Register MIR (Maximum Instruction Register), das von einer den emulierten Lockstep Betrieb unterstützenden Software (ELSO) beschrieben wird.

Ferner weist die CPU den Komparator oder Vergleicher K auf, der die Anzahl der ausgeführten Befehle, also den Zähler CIC, mit dem Register MIR vergleicht und bei Gleichheit beispielsweise eine Interrupt-Anforderung generiert, der die Befehlsausführung nach der Zahl der durch das Register MIR vorgegeben Instruktionen unterbricht und die CPU in einen anderen Betriebsmodus schaltet. In diesem Betriebsmodus wird beispielsweise geeigneter Microcode ausgeführt oder in eine Interrupt Service Routine verzweigt oder per Hardware-Signalen das Erreichen dieses Synchronisationspunktes angezeigt. In diesem Betriebsmodus werden dann den redundanten CPUs die externen Ereignisse so präsentiert, daß nach dem Verlassen dieses Betriebsmodus alle CPUs diese Ereignisse gleich bewerten können und somit in der Folge die gleichen Befehle ausführen werden.

Beispielsweise verzweigt die CPU nach Erreichen der durch das Register MIR vorgegeben Anzahl von Maschineninstruktionen in eine Interrupt Service Routine, in welcher der Zustand von durch die beschriebene Hardware von der CPU ferngehaltenen Interrupt Signalen so abgefragt wird, daß eine redundante CPU, die ggf. diese Abfrage zu einem geringfügig späteren Zeitpunkt stellt, die identische Auskunft erhält.

Vor dem Verlassen des gesonderten Betriebsmodus wird der Zähler CIC zurückgesetzt. Anschließend wird zu der Programmstelle zurückgesprungen, an der die Unterbrechung durch das Erreichen des durch das Register MIR vorgegeben Zählerwertes CIC stattgefunden hat. Danach wird die CPU wieder die durch das Register MIR vorgegebene Anzahl von Maschineninstruktionen ausführen und bei Erreichen des Registerwertes MIR durch Zähler CIC den Mode wechseln und dadurch die Annahme von externen Ereignissen ermöglichen.

Beispielsweise kann eine den emulierten Lockstep-Betrieb unterstützende Software ELSO das Register MIR auf einen Wert von 10.000 setzen. Eine CPU, die mit 5 GHz Taktfrequenz betrieben wird und im Mittel einen Maschinenbefehl pro Takt (Länge eines Taktes: 1/200 ps) ausführt, würde so nach 2 µs in der Befehlsausführung unterbrochen werden und die Synchronisation mit externen Ereignissen ermöglichen.

## Patentansprüche

1. Verfahren zur Synchronisation externer Ereignisse, die einem Baustein (CPU) zugeführt werden und diesen beeinflussen, demgemäss die externen Ereignisse zwischengespeichert werden, wobei die gespeicherten externen Ereignisse in einem gesonderten Betriebsmodus des Bausteins zur Verarbeitung durch zumindest eine Ausführungseinheit (EU) des Bausteins abgerufen werden und wobei der Baustein in diesen Betriebsmodus ansprechend auf die Erfüllung einer durch Befehle vorgebbaren oder fest vorgegebenen Bedingung eintritt.

2. Verfahren nach Anspruch 1,
**dadurch gekennzeichnet,**
**dass** der Wechsel in den gesonderten Betriebsmodus ausgeführt wird, falls durch ein Komparatorelement (K) des Bausteins die Übereinstimmung eines Zählelementes (CIC) mit einem Registerelement (MIR) ermittelt wird, wobei der Inhalt des Registerelementes (MIR) durch Befehle vorgebbar ist und das Zählelement (CIC) die Anzahl der durch die Ausführungseinheit ausgeführten Instruktionen seit dem letzten Wechsel in den gesonderten Betriebsmodus enthält.

3. Verfahren nach einem der Ansprüche 1 oder 2,
**dadurch gekennzeichnet,**
**dass** in redundanten Systemen, die zumindest zwei Bausteine (CPU) aufweisen, eine identische Folge von Instruktionen für die Bausteine (CPU) vorgesehen ist und durch die Bausteine im gesonderten Betriebsmodus identische externe Ereignisse abgerufen werden.

4. Verfahren nach Anspruch 3,
**dadurch gekennzeichnet,**
**dass** ein schnellerer Baustein (CPU) durch eine Steuerung im gesonderten Betriebsmodus belassen wird, bis ein langsamerer Baustein das Ende des gesonderten Betriebsmodus erreicht hat.

5. Prozessorbaustein (CPU), der zumindest folgendes aufweist:
- mindestens eine Ausführungseinheit (EU),
- mindestens ein Zählerelement (CIC) zum Zählen der durch die Ausführungseinheit ausgeführten Instruktionen seit dem letzten Wechsel in den gesonderten Betriebsmodus,
- mindestens ein Registerelement (MIR), dessen Inhalt durch Befehle vorgebbar oder fest vorgegeben ist,
- mindestens ein Komparatorelement (K) zum Umschalten der Ausführungseinheit (EU) in einen gesonderten Betriebsmodus ansprechend auf die Übereinstimmung des Zählelementes (CIC) mit dem Registerelement (MIR), wobei in dem gesonderten Betriebsmodus zwischengespeicherte, dem Prozessorbaustein (CPU) zuzuführende externe Ereignisse, die den Prozessorbaustein (CPU) beeinflussen, durch den Prozessorbaustein (CPU) abgerufen werden.

6. System bestehend aus mindestens zwei Prozessorbausteinen (CPU), die jeweils zumindest folgendes aufweisen:
- mindestens eine Ausführungseinheit (EU),
- mindestens ein Zählerelement (CIC) zum Zählen der durch die Ausführungseinheit ausgeführten Instruktionen seit dem letzten Wechsel in den gesonderten Betriebsmodus,
- mindestens ein Registerelement (MIR), dessen Inhalt durch Befehle vorgebbar oder fest vorgegeben ist,
- mindestens ein Komparatorelement (K) zum Umschalten der Ausführungseinheit (EU) in einen gesonderten Betriebsmodus ansprechend auf die Übereinstimmung des Zählelementes (CIC) mit dem Registerelement (MIR), wobei in dem gesonderten Betriebsmodus zwischengespeicherte, den Prozessorbausteinen zuzuführende externe Ereignisse, welche die Prozessorbausteine beeinflussen, durch die Prozessorbausteine abgerufen werden.

7. System nach Anspruch 6, das zusätzlich eine Verbindung zwischen zumindest zwei der Prozessorbausteine (CPU), die eine identische Instruktionsfolge ausführen, aufweist, wobei die Verbindung zum Übertragen von Synchronisationsinformationen der gesonderten Betriebsmodi vorgesehen ist.
